# EUROPÄISCHE PATENTANMELDUNG

(11) **EP 1 111 756 A2**
(43) Veröffentlichungstag der Anmeldung: **27.06.2001**
(21) Anmeldenummer: 00123472.3
(22) Anmeldetag: 07.11.2000
(51) Int. Cl.: H02K 1/27, H02K 16/04

(54) **Elektrische Maschine**

(30) Priorität: 14.12.1999 DE 19960182
(71) Anmelder: Volkswagen Aktiengesellschaft, 38436 Wolfsburg (DE)
(72) Erfinder: Warmers, Heinrich, Dr.-Ing., 28844 Weyhe (DE); Adamis, Panagiotis, Prof., 38442 Wolfsburg (DE); Amecke, Holger, 38104 Braunschweig (DE)

(57) **Zusammenfassung**

Die Erfindung betrifft die Ausgestaltung des Rotors (2,5) einer elektrischen Maschine, wobei vorgeschlagen wird, die Permanentmagnete (3,6) des Rotors (2,5) in den Trägerwerkstoff des Rotors (2,5) einzubetten. Hierfür sind verschiedene Ausführungsbeispiele möglich, wobei die Permanentmagnete (3,6) in ein Geflecht aus glas- oder kohlefaserverstärktem Kunststoff eingebunden oder selbst aus einem kunststoffgebundenen Material gefertigt werden können. Ebenso ist es möglich, die Permanentmagnete (3,6) in einen oder mehrere Ringe aus sehr dünnen, spiralförmig aufgewickelten Blechen (15) einzubetten. Durch diese Ausführungsbeispiele wird eine Gewichts- und Volumeneinsparung erzielt, wobei zudem Wirbelstromverluste vermieden werden können, so daß sich die Erfindung insbesondere zum Einsatz in elektrischen Maschinen mit einem doppelten Luftspalt, d.h. mit zwei Statoren (7,8), eignet.

## Beschreibung

Die vorliegende Erfindung betrifft eine elektrische Maschine nach dem Oberbegriff des Anspruches 1, 5 oder 8.

Viele mit Permanentmagnete betriebene elektrischen Maschinen nutzen lediglich einen Luftspalt. Diese elektrischen Maschinen weisen somit lediglich einen Stator auf, der entweder innerhalb oder außerhalb des Rotors angeordnet ist. Der Rotor selbst umfaßt einen Rotorträger, der oft durch einen geblechten Eisenträger gebildet ist und auf den die Permanentmagnete einseitig aufgeklebt werden, wobei der Eisenwerkstoff des Rotorträgers nicht nur die Tragfunktion für die Permanentmagnete, sondern auch eine magnetische Rückschlußfunktion übernimmt.

Die Verwendung des Eisen- oder Stahlwerkstoffs ist jedoch mit einem hohen Trägheitsmoment verbunden und führt im Betrieb zu hohen Fliehkräften. Darüber hinaus können bei Vollmetallträgern hohe Wirbelstromverluste entstehen. Zudem sind derartige Rotoren nur bedingt oder überhaupt nicht für den Betrieb in Doppelluftspalt-Maschinen geeignet. Derartige elektrische Maschinen umfassen einen hohlzylindrischen Rotor, wobei ein erster hohlzylindrischer Stator innerhalb des Rotors und ein zweiter hohlzylindrischer Stator außerhalb des Rotors angeordnet ist, so daß ein erster Luftspalt zwischen dem Rotor und dem ersten Stator und ein zweiter Luftspalt zwischen dem Rotor und dem zweiten Stator gebildet wird. Derartige Doppelluftspalt-Maschinen sind beispielsweise in der DE 36 09 351 A1, DE 34 38 747 A1 oder der JP 58 099 250 A offenbart.

Des weiteren ist in der US 3,629,626 A eine elektrische Maschine nach dem Oberbegriff des Anspruches 1 offenbart, wobei diese elektrische Maschine in Form eines Doppelluftspalt-Motors mit einem zwischen zwei Statoren drehbar gelagerten Rotor ausgestaltet ist. Der Rotor umfaßt einen aus einem relativ leichten Material, beispielsweise Fiberglas, gefertigten Rotorträger, in den stangenförmige Permanentmagnete eingebettet sind.

Der vorliegenden Erfindung liegt die Aufgabe zugrunde, eine elektrische Maschine vorzuschlagen, deren Rotorausgestaltung eine Gewichts- und Volumeneinsparung sowie eine Reduzierung bzw. Vermeidung von Wirbelstromverlusten ermöglicht und darüber hinaus insbesondere zum Einsatz in Doppelluftspalt-Maschinen geeignet ist.

Diese Aufgabe wird erfindungsgemäß durch eine elektrische Maschine mit den Merkmalen des Anspruches 1, 5 oder 8 gelöst. Die Unteransprüche definieren jeweils bevorzugte und vorteilhafte Ausführungsformen der vorliegenden Erfindung.

Die vorliegende Erfindung beruht auf der Erkenntnis, daß es insbesondere für eine Anwendung des Rotors in elektrischen Maschinen mit doppelten Luftspalten vorteilhaft ist, die Permanentmagnete in dem Werkstoff des Rotorträgers einzubetten. Die magnetische Rückschlußfunktion wird dann von den einzelnen Statoren übernommen. Vorteilhaft dabei ist insbesondere, daß die statischen Magnetkräfte nahezu vollständig ausgeglichen sind und somit die Tragwerkkonstruktion der elektrischen Maschine lediglich die Flieh- und Gewichtskräfte sowie die Nutzmomente aufnehmen muß. Die vorliegende Erfindung ist jedoch nicht nur auf den Einsatz in einer elektrischen Maschine mit doppelten Luftspalten, d.h. zwei Statoren, beschränkt, sondern kann selbstverständlich auf jede Art von permanentmagnetisch betriebene Maschinen angewendet werden.

Gemäß einem ersten Ausführungsbeispiel der vorliegenden Erfindung wird vorgeschlagen, die Permanentmagnete in ein Geflecht oder Gewirke einzubinden, wobei das Geflecht oder Gewirke vorzugsweise aus einem glas- oder kohlefaserverstärkten Kunststoff besteht. Um die Luftspaltinduktion nicht zu sehr zu beeinflussen, sollten die einzelnen Lagen des Geflechts oder Gewirkes eine Dicke von lediglich 0,5 mm bis 1 mm aufweisen.

Gemäß einem zweiten Ausführungsbeispiel wird vorgeschlagen, die Permanentmagnete selbst aus einem kunststoffgebundenen Material, welches insbesondere glas- oder kohlefaserverstärkt sein kann, zu fertigen.

Gemäß einem dritten Ausführungsbeispiel der vorliegenden Erfindung wird schließlich vorgeschlagen, die Permanentmagnete in einem Blechwickel anzuordnen, welcher einoder mehrlagig sein kann. Die einzelnen, vorzugsweise miteinander verklebten Blechlagen sind zur Vermeidung von Wirbelstromverlusten sehr dünn auszulegen, wobei als Blechmaterial zudem ein Material verwendet werden sollten, dessen relative magnetische Permeabilität in etwa 1 beträgt, um den Verlauf des magnetischen Flusses nicht zu stören und trotzdem eine gegen Wirbelstromverluste in den Permanentmagneten abschirmende Wirkung zu gewährleisten.

Durch die zuvor beschriebenen Ausführungsbeispiele wird gegenüber einem Rotorträger mit beispielsweise aufgeklebten Permanentmagneten eine deutliche Gewichts- und Volumeneinsparung erzielt, da Eisen- oder Stahlkonstruktionen als Träger der Permanentmagnete entfallen können. Zudem können Wirbelstromverluste zuverlässig reduziert bzw. sogar vermieden werden.

Die vorliegende Erfindung wird nachfolgend unter Bezugnahme auf die beigefügten Zeichnungen anhand bevorzugter Ausführungsbeispiele beschrieben. Dabei zeigt
- Fig. 1: eine Längsquerschnittsansicht einer erfindungsgemäßen elektrischen Maschine, welche beispielhaft in Form einer als Drehmomentwandler wirkenden Generator-Motor-Kombination mit zwei Luftspalten ausgestaltet ist,
- Fig. 2: eine Schnittansicht entlang einer in Fig. 1 gezeigten Linie A-A',
- Fig. 3: eine mögliche Ausgestaltung der Rotoren der in Fig. 1 gezeigten elektrischen Maschine gemäß einem ersten Ausführungsbeispiel,
- Fig. 4: eine mögliche Ausgestaltung der Rotoren der in Fig. 1 gezeigten elektrischen Maschine gemäß einem zweiten Ausführungsbeispiel, und
- Fig. 5: eine mögliche Ausgestaltung der Rotoren der in Fig. 1 gezeigten elektrischen Maschine gemäß einem dritten Ausführungsbeispiel.

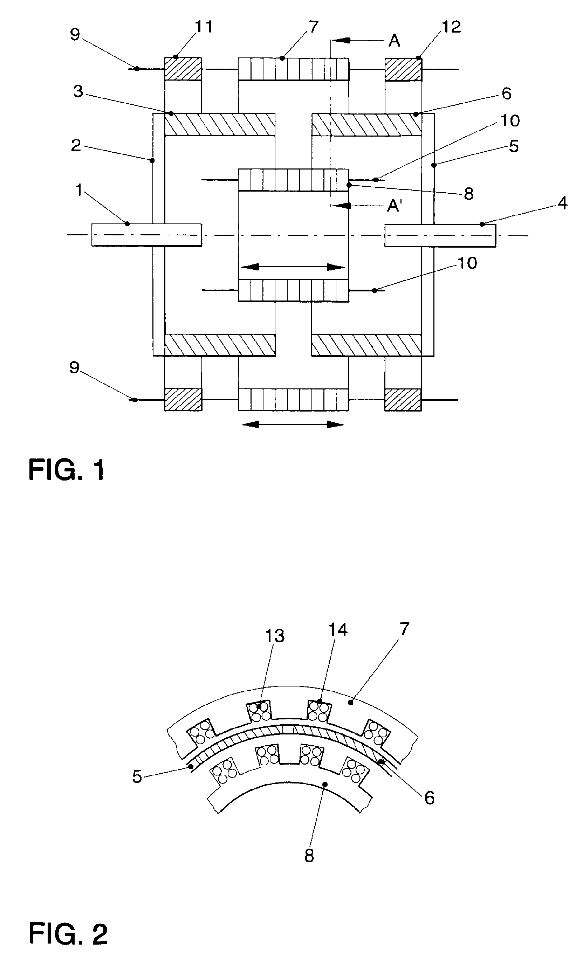

Die in Fig. 1 gezeigte Generator-Motor-Kombination umfaßt eine Eingangswelle 1, die mit einer nicht gezeigten Antriebsmaschine, insbesondere einem Verbrennungsmotor eines Kraftfahrzeugs, verbunden ist. Diese Eingangswelle 1 trägt einen Generator-Rotor 2, der hohlzylindrisch ausgestaltet ist und mehrere mit wechselnder Polarität entlang seines Umfangs verteilte Permanentmagnete 3 aufweist. Auf der gegenüberliegenden Seite ist eine Ausgangswelle 4 vorgesehen, die mit einem hohlzylindrischen (Elektro)Motor-Rotor 5 verbunden ist. Auch der Motor-Rotor 5 trägt mehrere entlang seines Umfangs verteilte Permanentmagnete 6 mit wechselnder Polarität.

Im Innenraum der beiden axial nebeneinander angeordneten Rotoren 2 und 5 ist ein hohlzylindrischer Stator 8 angeordnet, der an Stangen 10 axial, d.h. in Längsrichtung der Maschine, verschiebbar gelagert ist. Darüber hinaus ist ein weiterer hohlzylindrischer Stator 7 vorgesehen, der die beiden Rotoren 2 und 5 umgibt, so daß die Rotoren 2 und 5 sowie der erstgenannte Stator 8 im hohlzylindrischen Innenraum des äußeren Stators 7 angeordnet sind. Auch der äußere Stator 7 ist an entsprechenden Stangen 9 axial verschiebbar gelagert.

Die beiden Statoren 7 und 8 tragen jeweils vorzugsweise mehrere Teilwicklungen (typischerweise zwischen drei und fünf Teilwicklungen pro Stator), die vollkommen voneinander galvanisch getrennt sein können.

In Fig. 2 ist ein Axialschnitt entlang einer in Fig. 1 gezeigten Schnittlinie A-A' dargestellt, woraus ersichtlich ist, daß die einzelnen Statorwicklungen 13 der beiden Statoren 7 und 8 in gegenüberliegenden Nuten 14 angeordnet sind, so daß zwischen den Permanentmagneten des entsprechenden Rotors (im vorliegenden Fall den Permanentmagneten 6 des Motor-Rotors 5) jeweils ein Luftspalt zwischen den Statorwicklungen 13 des äußeren Stators 7 und den Statorwicklungen des inneren Stators 8 vorhanden ist. Die Winkelposition der sich gegenüberliegenden Nuten 14 der beiden Statoren 7 und 8 sollte derart gewählt werden, daß sich im Betrieb minimale Rastmomente einstellen. Die Rastmomente sind von der jeweiligen Ausgestaltung der Maschine abhängig, wobei die bestmöglichen Stellungen der Nuten zueinander durch geeignete Feldberechnungsprogramme ermittelt werden können. Da sich bei minimalen Rastmomenten auch die magnetische Leitfähigkeit über den Drehwinkel nur minimal ändert, ergibt sich eine minimale Wechseldurchflutung und somit minimale Hystere- und Wirbelstromverluste.

Die beiden Statoren 7 und 8 lassen sich vorzugsweise unabhängig voneinander axial verschieben. Damit der Rückschluß für den inneren Stator 8 auch dann gewahrt bleibt, wenn der äußere Stator 7 eine andere axiale Position wie der innere Stator 8 einnimmt, sind an den Stirnflächen der Generator-Motor-Kombination bzw. der beiden Rotoren 2 und 5 Rückschlußringe 11 und 12 angeordnet, die zusammen mit dem äußeren Stator 7 axial verschoben werden können.

Durch die axiale Verschiebbarkeit der beiden Statoren 7 und 8 wird bewirkt, daß die für den Generator-Rotor 2 bzw. Motor-Rotor 5 wirksame Leiterlänge der entsprechenden Statorwicklungen 13 variiert werden kann. Auf dieser Variation der wirksamen Leiterlänge in den Magnetfelder des Generator-Rotors 2 bzw. Motor-Rotors 5 beruht die Steuer- bzw. Regelbarkeit der Drehzahl- und Drehmomentübersetzung der dargestellten Maschine. Die mit den Permanentmagneten 3 bzw. 6 bestückten Rotoren 2 bzw. 5 wirken auf die Statorwicklungen 13 der beiden Statoren 7 und 8. Durch die Drehung des Generator-Rotors 2 wird eine Änderung des magnetischen Flusses hervorgerufen, die in den einzelnen Statorwicklungen 13 eine elektromotorische Kraft induziert, wodurch es zu einem entsprechenden elektrischen Stromfluß kommt. Dieser Stromfluß bremst den Generator-Rotor 2 ab und treibt gleichzeitig den Motor-Rotor 5 an. Die durch die daraus resultierende Drehung des Motor-Rotors 5 wiederum hervorgerufene Flußänderung induziert in den Statorwicklungen 13 eine elektromotorische Gegenkraft. Da die für den Generator-Rotor 2 bzw. Motor-Rotor 5 wirksame Länge der Statorwicklungen 13 jeweils aufgeteilt werden kann, ist eine kontinuierliche Drehmomentwandlung möglich.

Wie der Darstellung von Fig. 2 entnommen werden kann, sind die Permanentmagnete des Motor-Rotors 5 (sowie die Permanentmagnete des Generator-Rotors 2) in das Material oder den Werkstoff des Rotorträgers eingebettet, so daß diese Rotorausgestaltung besonders gut für elektrische Maschinen mit doppelten Luftspalten geeignet ist. Die Art der Einbettung der Permanentmagnete in den Rotorträger kann auf unterschiedliche Weise erfolgen.

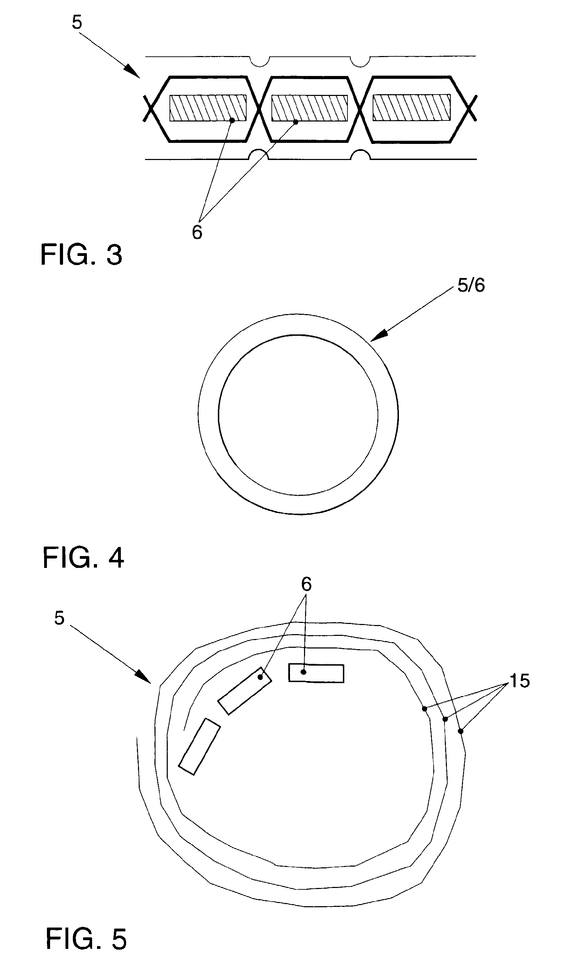

Wie in Fig. 3 gezeigt ist, können die Permanentmagnete 6 in ein Geflecht oder Gewirke aus Gewebelagen eingebunden werden. Diese beispielsweise vernähten oder verwobenen Gewebelagen können aus einem faserverstärkten, insbesondere glas- oder kohlefaserverstärkten, Kunststoffmaterial bestehen. Damit sichergestellt werden kann, daß die Luftspaltinduktion nicht zu gering wird, müssen die Gewebelagen relativ dünn sein, wobei ihre Dicke nicht 0,5 mm bis 1 mm übersteigen sollte.

In Fig. 4 ist eine weitere Ausgestaltungsmöglichkeit für den Rotor, im vorliegenden Fall für den Motor-Rotor 5, dargestellt, wobei der vollständige Rotor 5 in einem Querschnitt dargestellt ist. Die Permanentmagnete 6 sind wie der entsprechende Rotorträger aus einem kunststoffgebundenen glas- oder kohlefaserverstärkten Material gefertigt und somit vollständig in den Rotorträger eingebunden, was in Fig. 4 dadurch angedeutet ist, daß die Permanentmagnete nicht separat dargestellt sind.

Eine weitere Ausgestaltungsmöglichkeit für den Rotor ist in Fig. 5 dargestellt. Die Permanentmagnete 6 werden dabei in einem oder in mehreren Ringen aus spiralförmig aufgewickelten Blechen oder Blechlagen 15 eingebettet. Die einzelnen Blechlagen sind zur Vermeidung von Wirbelstromverlusten sehr dünn auszulegen, wobei ihre Dicke kleiner als 0,1 mm sein sollte und insbesondere in etwa 0,05 mm betragen kann. Als Blechmaterial wird vorteilhafterweise ein Material gewählt, dessen relative magnetische Permeabilität im Bereich von 1 liegt, so daß einerseits der magnetische Flußverlauf nicht beeinträchtigt wird und andererseits dennoch eine gegen Wirbelstromverluste in den Permanentmagneten 6 abschirmende Wicklung vorhanden ist. Als Blechmaterial eignet sich beispielsweise insbesondere eine Titanlegierung. Die einzelnen Bleche oder Blechlagen 15 sind vorzugsweise miteinander verklebt. Zu diesem Zweck können die Blechlagen 15 vor dem Verarbeiten mit einer nichtleitenden Beschichtung, beispielsweise einem Back-Lack, versehen werden, wobei diese Beschichtung unter Druck und Wärmeeinfluß aushärtet und die einzelnen Blechlagen 15 miteinander verklebt. Obwohl dies in Fig. 5 nicht gezeigt ist, können die Permanentmagnete 6 selbstverständlich auch zwischen den einzelnen Blechlagen 15 angeordnet sein.

### BEZUGSZEICHENLISTE

- 1: Antriebswelle
- 2: Generator-Rotor
- 3: Permanentmagnet
- 4: Abtriebswelle
- 5: Elektromotor-Rotor
- 6: Permanentmagnet
- 7: Äußerer Stator
- 8: Innerer Stator
- 9: Äußere Verschiebestange
- 10: Innere Verschiebestange
- 11: Rückschlußring
- 12: Rückschlußring
- 13: Statorwicklung
- 14: Nut
- 15: Blechlage

## Patentansprüche

1. Elektrische Maschine, mit mindestens einem Stator (7,8), und mit mindestens einem Rotorträger (2,5), in den mehrere Permanentmagnete (3,6) eingebettet sind, wobei der Rotorträger (2,5) gegenüber dem Stator (7,8) drehbar gelagert ist,
**dadurch gekennzeichnet**, daß die Permanentmagnete (3,6) in ein Geflecht oder Gewirke des Rotorträgers (2,5) eingebunden sind.

2. Elektrische Maschine nach Anspruch 1, **dadurch gekennzeichnet**, daß das Geflecht oder Gewirke des Rotorträgers (2,5) aus einem faserverstärkten Kunststoff gefertigt ist.

3. Elektrische Maschine nach Anspruch 2, **dadurch gekennzeichnet**, daß der Kunststoff des Geflechts oder Gewirkes glas- oder kohlefaserverstärkt ist.

4. Elektrische Maschine nach einem der vorhergehenden Ansprüche, **dadurch gekennzeichnet**, daß die die Permanentmagnete (3,6) umgebenden Lagen des Geflechts oder Gewirkes des Rotorträgers (2,5) eine Dicke im Bereich 0,5 mm bis 1 mm aufweisen.

5. Elektrische Maschine, mit mindestens einem Stator (7,8), und mit mindestens einem Rotorträger (2,5), in den mehrere Permanentmagnete (3,6) eingebettet sind, wobei der Rotorträger (2,5) gegenüber dem Stator (7,8) drehbar gelagert ist,
**dadurch gekennzeichnet**, daß die Permanentmagnete (3,6) aus einem kunststoffgebundenen Material gefertigt sind.

6. Elektrische Maschine nach Anspruch 5, **dadurch gekennzeichnet**, daß die Permanentmagnete (3,6) aus einem faserverstärkten kunststoffgebundenen Material gefertigt sind.

7. Elektrische Maschine nach Anspruch 6, **dadurch gekennzeichnet**, daß das kunststoffgebundene Material der Permanentmagnete (3,6) glas- oder kohlefaserverstärkt ist.

8. Elektrische Maschine, mit mindestens einem Stator (7,8), und mit mindestens einem Rotorträger (2,5), in den mehrere Permanentmagnete (3,6) eingebettet sind, wobei der Rotorträger (2,5) gegenüber dem Stator (7,8) drehbar gelagert ist,
**dadurch gekennzeichnet**, daß der Rotorträger (2,5) mindestens eine Blechwicklung umfaßt, in deren Inneren die Permanentmagnete (3,6) angeordnet sind.

9. Elektrische Maschine nach Anspruch 8, **dadurch gekennzeichnet**, daß die Blechwicklung des Rotorträgers (2,5) mehrlagig ist.

10. Elektrische Maschine nach Anspruch 9, **dadurch gekennzeichnet**, daß die Permanentmagnete (3,6) an der Innenseite der innersten Blechlage und/oder zwischen einzelnen Blechlagen (15) der Blechwicklung angeordnet sind.

11. Elektrische Maschine nach Anspruch 9 oder 10, **dadurch gekennzeichnet**, daß die einzelnen Blechlagen (15) miteinander verklebt sind.

12. Elektrische Maschine nach 11, **dadurch gekennzeichnet**, daß die einzelnen Blechlagen (15) mit einer nichtleitenden Beschichtung versehen sind, welche unter Wärmeeinfluß und/oder Druck die Blechlagen (15) miteinander verklebt.

13. Elektrische Maschine nach einem der Ansprüche 8-12, **dadurch gekennzeichnet**, daß die Blechlagen (15) der Blechwicklung weniger als 0,1mm dick sind.

14. Elektrische Maschine nach einem der Ansprüche 8-13, **dadurch gekennzeichnet**, daß die Blechwicklung aus einem Material gefertigt ist, dessen relative magnetische Permeabilität in etwa 1 beträgt.

15. Elektrische Maschine nach Anspruch 14, **dadurch gekennzeichnet**, daß die Blechwicklung aus einer Titanlegierung gefertigt ist.

16. Elektrische Maschine nach einem der vorhergehenden Ansprüche, **dadurch gekennzeichnet**, daß ein erster Stator (8) mit mindestens einer Statorwicklung (13) innerhalb des Rotorträgers (2,5) und ein zweiter Stator (7) mit mindestens einer Statorwicklung (13) außerhalb des Rotorträgers (2,5) angeordnet ist.
